# EUROPEAN PATENT SPECIFICATION

(11) **EP 4 019 894 B1**
(45) Date of publication and mention of the grant of the patent: **07.02.2024**
(21) Application number: 20216608.8
(22) Date of filing: 22.12.2020
(51) Int. Cl.: G01B 21/04, G06F 18/22, G06F 18/40, G06V 10/143, G06V 10/20, G06V 10/44, G06V 20/64, G01B 5/008, G05B 19/401

(54) **METHOD OF MEASURING A WORKPIECE BY USING A COORDINATE MEASURING MACHINE, AND ARRANGEMENT COMPRISING A COORDINATE MEASURING MACHINE**
VERFAHREN ZUM VERMESSEN EINES WERKSTÜCKS UNTER VERWENDUNG EINER KOORDINATENMESSMASCHINE UND ANORDNUNG MIT EINER KOORDINATENMESSMASCHINE
PROCÉDÉ DE MESURE D'UNE PIÈCE AU MOYEN D'UNE MACHINE DE MESURE DE COORDONNÉES, ET AGENCEMENT COMPRENANT UNE MACHINE DE MESURE DE COORDONNÉES

(43) Date of publication of application: 29.06.2022
(73) Proprietor: Carl Zeiss Industrielle Messtechnik GmbH, 73447 Oberkochen (DE)
(72) Inventor: Wojek, Christian, 73434 Aalen (DE); Schuster, Ecaterina, 73033 Göppingen (DE); Stich, Timo, 07751 Jena (DE); Srikantha, Abhilash, 89231 Neu-Ulm (DE)
(74) Representative: Brunotte, Joachim Wilhelm Eberhard

(56) References cited:
- EP-A1- 3 495 771
- WO-A1-2016/150517
- WO-A1-2019/219202
- DE-A1-102010 014 423
- DE-A1-102012 024 934

## Description

The invention relates to a method of measuring a workpiece to be measured by using a coordinate measuring machine and to an arrangement comprising a coordinate measuring machine.

In the field of metrology, in particular coordinate measuring of workpieces, it is well known to plan the measurement of workpieces in advance to performing the measurement. For example, such a plan, which is often named "inspection plan", can be generated as soon as the dimensions and possibly other properties of the workpiece have been specified. From the inspection plan, a "measurement plan" can be generated that takes the specific type of coordinate measuring machine into account which is to be used for measuring the workpiece. In particular when a multiplicity of workpieces is manufactured, several or all of the workpieces are to be measured according to the measurement plan in order to meet quality specifications. Typically, workpieces for series production are defined using computer aided design (CAD) tools which results in CAD models of the workpieces. However, other options of designing the workpiece still exist, such as the traditional line drawing that is prepared by an engineer. Correspondingly, the measurement plan and/or inspection plan can be derived from workpiece design definitions other than computer aided design definitions. However, even in this case, the plan may be at least partly encoded in computer readable format or may be defined in other format, such as handwritten on paper. More generally speaking, a measurement procedure of measuring a workpiece may be predefined and information on the predefined measurement procedure may be saved and may be, in particular, stored in computer readable format. The inspection plan and the measurement plan are examples of this type of information.

When focusing on a specific type of coordinate measuring machines or on a specific coordinate measuring machine, the machine may be used to measure the coordinate of different types of workpieces. To start the process of measuring a specific workpiece, the machine requires corresponding instructions. If a plurality of predefined measurement exists, a user (such as an operator of the coordinate measuring machine) may scan through the existing measurement procedures (information on them and/or the procedures themselves may be stored in a computer readable database) and may start the measurement procedure according to one of the procedures. In case of a high number of predefined measurement procedures, this process is time-consuming. In any case, this process is prone to errors, especially if there are similar workpieces for which different measurement procedures have been predefined. The dimensions of the similar workpieces may be different so that the measurement procedure may not be performed correctly and/or may be performed with reduced precision. Even worse, the coordinate measuring machine and/or the workpiece may be damaged for example if a measurement sensor of the machine collides with the workpiece, because a workpiece with different dimensions is expected.

WO 2019/219202 A1 describes a method for generating a resultant test plan for testing a measurement object, wherein at least one data record is generated by measuring the measurement object. The data record may be an image data record. The measurement object or part of the measurement object is assigned to at least one object class on the basis of data, a test plan assigned to the object class is determined as object class-specific test plan and the resultant test plan is determined on the basis of the object class-specific test plan.

DE 10 2012 024934 A1 describes a method for initial establishment of a measurement program for measurement of new measuring object by using a measuring robot having a contactlessly measuring sensor. An existing measurement program is accessed which exists for a known measuring object that is similar to the new measuring object as far as possible. The search for a similar measuring object can be performed essentially automatically, controlled by software. Different features of the new measuring object are determined and are compared with corresponding features of known measuring objects.

WO 2016/150517 A1 describes a method for determining dimensional properties of a measured object. For determining dimensional properties of a measured object, which has a plurality of geometrical elements, a database is provided, which contains a plurality of predefined measurement elements and a plurality of typical test characteristics for the predefined measurement elements. Each typical test characteristic represents a defined dimensional property of at least one predefined measurement element. In addition, a visual display of the measured object is made available, which shows at least one first geometrical element. The operator can select the first geometrical element on the basis of the visual display. Test characteristics suitable for the selected first geometrical element are then displayed.

DE 10 2010 014 423 A1 describes a method for measuring coordinates of workpiece. A measuring procedure is assigned to recognized workpiece, and a measuring procedure assigned to respective recognized workpiece is started automatically. To detect the workpiece, at least one image of the workpiece is recorded and evaluated. By means of software, it is possible to identify which workpiece or which type of workpiece is involved. It is an object of the present invention to support the identification of a workpiece to be measured, thereby supporting the identification of a measurement procedure that corresponds to the workpiece. The claimed invention is defined in the independent claims 1 and 7.

The following is proposed: A method of measuring a workpiece to be measured by using a coordinate measuring machine, the method including the steps:
- placing the workpiece to be measured in a working space of the coordinate measuring machine,
- capturing at least one capture image of the workpiece to be measured while the workpiece is placed in the working space,
- accessing assignment information on assignments of at least some of a plurality of representations of workpieces to images of workpieces, the plurality of representations being stored in a database, wherein each of the at least some of the plurality of representations has been assigned to at least one image of a workpiece based on a selection result of a selection that was made earlier resulting in a corresponding part of the assignment information,
- automatically identifying possibly matching representations that are possibly matching the workpiece to be measured from the plurality of representations stored in the database,
- outputting output information about the possibly matching representations that have been identified,
wherein the step of identifying the possibly matching representations includes identifying at least one assigned possibly matching representation based on the assignment information by assessing the at least one capture image and identifying at least one similar possibly matching representation that is identified as similar to the at least one assigned possibly matching representation based on predefined similarity information.

Furthermore, an arrangement is proposed comprising a coordinate measuring machine and an identification device for identifying a representation of a workpiece to be measured, wherein
- the arrangement further comprises at least one image capturing device, the image capturing device being adapted to capture at least one capture image of the workpiece to be measured while the workpiece to be measured is placed in a working space of the coordinate measuring machine,
- wherein the identification device comprises an interface to a database and is adapted to access assignment information on assignments of at least some of a plurality of representations of workpieces to images of workpieces, the plurality of representations being stored in the database, wherein each of the at least some of the plurality of representations has been assigned to at least one image of a workpiece based on a selection result of a selection that was made earlier resulting in a corresponding part of the assignment information,
- the identification device is adapted to automatically identify possibly matching representations that are possibly matching the workpiece to be measured from the plurality of representations stored in the database,
- the identification device is adapted, while identifying the possibly matching representations, identifying at least one assigned possibly matching representation based on the assignment information by assessing the at least one capture image and identifying at least one similar possibly matching representation that is identified as similar to the at least one assigned possibly matching representation based on predefined similarity information.

In the following, the method and the arrangement will be described in more detail and embodiments and examples will be described. Any embodiment or example of the arrangement may be adapted to perform a corresponding embodiment or example of the method, and, vice versa, any embodiment or example of the method may be performed corresponding to an embodiment or example of the arrangement.

As mentioned above, it is proposed to capture one capture image or plural capture images of the workpiece to be measured while the workpiece is placed in the working space of the coordinate measuring machine. An image capturing device, in particular a digital camera, is used to capture the image, at least one of the images or all of the images. Besides conventional cameras comprising a camera housing and optical elements for redirecting incident radiation, other types of image capturing devices such as DSLR (digital single-lens reflex) cameras, radiation sensor arrays with micro-lens arrays and lens-less imaging devices may be used. In addition or alternatively, other types of image capturing devices can be used, such as laser scanning devices, for example LIDAR (light detection and ranging) devices. All these image capturing devices may be digital image capturing devices, in particular comprising an array of radiation-sensitive elements.

In addition or alternatively to the image capturing device being fixed relative to the workpiece, it is however possible to scan the workpiece using the image capturing device, i.e. perform a relative movement of the image capturing device and of the workpiece and capture (in particular electromagnetic and preferably visible, infrared and/or ultraviolet) radiation from the workpiece in different relative positions and/or relative orientations. Therefore, a single radiation-sensitive element may be sufficient, although scanning can also be performed using an array of elements.

In particular, the image capturing device and in case of more than one image capturing device the image capturing devices may be part of the arrangement according to the present invention. The at least one image capturing device is adapted to capture at least one capture image of the workpiece to be measured while the workpiece to be measured is placed in a working space of the coordinate measuring machine. In particular, the working space is the space where the workpiece to be measured can be measured by the machine.

The term coordinate measuring machine includes all types of devices with which the coordinates of workpieces can be determined. In one class of coordinate measuring machines, the coordinates are surface coordinates, which means that coordinates of surface points of workpieces are determined. Another class of coordinate measuring machines is alternatively or additionally able to determine coordinates inside workpieces. These include coordinate measuring machines that use invasive radiation penetrating the material of the workpiece and in particular measure the intensity of the radiation passing through the workpiece. Typically, the workpiece is irradiated from different directions and a particularly computer-aided reconstruction of the captured workpiece is carried out on the basis of the results of the irradiation. Such methods are also known as computed tomography (CT). The term coordinate measuring machine also includes classical coordinate measuring machines, for example devices in portal or gantry design, horizontal arm devices and articulated arm devices. The term coordinate measuring machine also includes machines that are not primarily designed as coordinate measuring machines, but that are set up to work like coordinate measuring machines. In particular, these machines have at least one measuring sensor that is used to determine the coordinates. For example, robots are known, e.g. with robot arms having swivel joints, on which a sensor for detecting the workpiece surface (for example a strip projection sensor) is attached instead of a tool. Other example are machine tools on which a measuring sensor (for example a tactile sensor instead of a machining tool or in addition to a machining tool) is attached. Hexapod mechanics are also known, for example, to which a sensor for detecting the workpiece surface (for example a tactile sensor) is attached instead of a machining tool. The invention is also not restricted with regard to the types of sensors that are used by a coordinate measuring machine to determine the coordinates. Tactile sensors have already been mentioned as an example, which can be of the switching type or the measuring type, for example. Optical sensors are often used as an alternative or in addition. There are also capacitive sensors and inductive sensors, for example. It is preferred that the coordinate measuring machine comprises resources for digital data processing, as will be explained later.

Having captured the at least one image, the at least one image is assessed. The assessment will be described later. In particular, plural capture images may be taken in different viewing directions, e.g. may be taken using a plurality of image capturing devices or by moving at least one image capturing device to a different capture position. Plural capture images increase the image information about the workpiece and may therefore facilitate and/or improve the identification of the workpiece.

In order to identify the workpiece to be measured and/or to identify any related information, such as a predefined procedure of measuring the workpiece by using the coordinate measuring machine, existing assignment information is accessed. The assignment information relates to assignments of at least some of a plurality of representations of workpieces to images of workpieces. The plurality of representations is stored in a database, in particular a computer-readable database, such as a database of digital data. The database may be realized by a single data storage unit or by a plurality of data storage unit, such as data storage units distributed over different locations. As will be explained later, the content of the database may vary with time. In particular, a part of the assignment information can be deleted and/or a new part can be added.

Each of the at least some of the plurality of representations has been assigned to at least one image of a workpiece based on a selection result of a selection that was made earlier resulting in a corresponding part of the assignment information. The selections may be made automatically and/or by at least one user. Generating the assignment information may be an optional preparation step of the method of the present invention. According to a preferred embodiment, at least one user selects - for each image of a workpiece and/or for each set of images of a workpiece - the actual workpiece that is shown by the image(s). This approach is simple and guarantees high quality of the assignment information. However, for example by using artificial intelligence, the selection can be made automatically. Although such artificial intelligence may require substantial data processing resources, the process of identifying possibly matching workpieces as described later is not delayed, since the selection is performed beforehand. As described in more detail elsewhere in this description, the assignment information can be improved by adding information based on further selection results. If the further selection is performed automatically, the use of artificial intelligence does not delay the identification of the matching workpiece significantly, since there is only one selection to be performed.

It is proposed to automatically identify possibly matching representations that are possibly matching the workpiece to be measured from the plurality of representations stored in the database. In particular, the possibly matching representations can be visualized on at least one display, such as a display of a computer monitor or of a handheld device. In addition or alternatively to a display, at least one projection image can be produced in order to visualize the possibly matching representations. It is not necessary to visualize all identified possibly matching representations at the same time, although this is also an option. For example, a user may scroll through the possibly matching representations and may thereby cause the visualization of, at each point in time, at least one sub-set of the possibly matching representations. It is not required that the complete representation of a workpiece is visualized. For example, a thumbnail image or any other form of reduced information about the representation may be output and/or visualized.

In any case, the visualization or any other output or indication of the identified possibly matching representations enables at least one user to take notice of the identified possibly matching representations. The at least one user may then select one of the identified possibly matching representations based on a comparison between at least one of the identified possibly matching representations and the at least one capture image of the workpiece to be measured. In particular, the at least one user may perform the comparison himself/herself. As will be explained in more detail with reference to a specific embodiment, the result of the selection can be used for updating and/or improving the assignment information.

The identification of the possibly matching representations from the plurality of representations stored in the database is performed automatically, for example by a computer or computer network. This means that no user action is required for this step. Examples how the identification can be performed in practice will be described later.

Any kind of representation can be stored in the database and can be used. It is even possible to use different kinds of representations for different workpieces. One type of representation is a multi-dimensional model, in particular a computer model, of the workpiece that is represented. In particular, a two-dimensional model can be used, such as a drawing of the workpiece. Preferably, in each case one three-dimensional model is used as representation of the workpiece, such as a CAD (Computer Aided Design) model. The dimensions of the multi-dimensional model can all be local dimensions. However, the dimensions may also include the time or any other dimension. Therefore, four-dimensional models with three local dimensions and the time may be used. The dimension time in particular means that the values of the local dimensions change in the course of time. This corresponds to a model, such as a computer model, of the workpiece that represents the moving workpiece.

The type of representation may be different from a model. For example, a photograph of the represented workpiece may be used as representation. Each photograph stored in the database may be the result of capturing the respective workpiece under predefined standard conditions. In addition or alternatively, an identifier that identifies the workpiece, for example by pointing to any information about the workpiece to be represented, may be used. For example, the information about the workpiece may be a textual description of the workpiece, a workpiece type or a model of the workpiece, such as one of the model types mentioned above.

The step of identifying the possibly matching representations includes identifying at least one assigned possibly matching representation based on the assignment information by assessing the at least one capture image. The at least one assigned possibly matching representation is one of the representations stored in the database and is one of the at least some of the plurality of representations which has been assigned to at least one image of a workpiece based on a selection result of a selection that was made earlier resulting in a corresponding part of the assignment information. In other words, the at least one capture image is assessed and the assigned one or the assigned ones of the representations stored in the database is/are identified. In this way, information on the selection result(s) of selection(s) that was/were made earlier is used to identify the at least one assigned possibly matching representation.

Identifying the at least one assigned possibly matching representation based on the assignment information is straightforward. In particular if only one assigned possibly matching representation is identified, it would be possible to determine the workpiece to be measured which is placed in the working space of the coordinate measuring machine device by simply assuming that the single representation that has been identified is the correct representation. This, however, is still prone to errors, since the at least one capture image of the workpiece might not capture the same type of workpiece as the at least one image to which the identified representation has been assigned. In other words, the earlier selection result(s) may be based on an image or on images which show a different type of workpiece than the workpiece to be measured, although the image or images may show a similar workpiece.

Therefore, the step of identifying the possibly matching representations further includes identifying at least one similar possibly matching representation, wherein the at least one similar possibly matching representation is identified as similar to the at least one assigned possibly matching representation based on predefined similarity information. This means that at least one similar representation is identified for each identified assigned representation. However, it is well within the scope of the present invention to identify only one assigned possibly matching representation for the workpiece to be measured. Preferably, a plurality of similar possibly matching representations is identified for the workpiece to be measured, although it may be only one similar representation. Which representations are similar can be determined (a) while the step of identifying the at least one possibly matching representation is performed, based on the predefined similarity information, and/or (b) can be determined beforehand. Specific examples will be described in the description of the figures.

In case (a), the criterion or criteria which has/have to be met so that two or more than two representations are similar can be defined beforehand as predefined similarity information, but the similarity of representations is determined while the step of identifying the at least one possibly matching representation is performed.

In case (b), the similarity information can be the information for each of the existing representations which representation is similar and optionally to which extent the representation is similar. Therefore, the representations may form groups of similar representations. Alternatively, it may have been determined or may be determined for each representation which other representations are similar, i.e. it does not necessarily mean that a third representation is similar to a first representation if the third representation is similar to a second representation and if the second representation is similar to the first representation. In case (b), the similarity information is updated if a representation is added to the representations in the database and/or if a representation is removed from the database or is excluded from the representations to be taken into account.

Cases (a) and (b) can be combined, for example if features of the representations are determined beforehand and the similarity of a representation to other representations is determined in the step of identifying the at least one possibly matching representation from the plurality of representations stored in the database.

In particular in case (b), a step may be performed of generating the predefined similarity information based on assessing features of workpieces prior to the step of identifying the at least one possibly matching representation from the plurality of representations stored in the database. Correspondingly, the arrangement may comprise a generation device adapted to generate the predefined similarity information based on assessing features of workpieces. The features may be extracted from models of the workpieces, for example. The step of generating the predefined similarity information may be considered as a preparation step and/or a step of training. In particular, the identification device can be trained and may generate the predefined similarity information. In addition or alternatively, the predefined similarity information can be generated by a different device, such as a remote computer or computer network, and can be transferred to the identification device.

In any case, training or not training the identification device to identify the at least one similar possibly matching representation, at least one predefined constraint may be taken into account when the at least one similar possibly matching representation is identified. In particular, the at least one predefined constraint can be taken into account during training or the similarity information can include the constraint(s). For example, a user may set the constraint that certain workpieces result in the same measurement procedure to be performed for these workpieces. The representations of these workpieces may then be similar according to the similarity information. In addition or alternatively, the constraints may relate to the circumstances of the measurement procedure to be performed, such as the maximum duration of the measurement procedure and/or the quality of production of the workpiece to be measured. A higher quality may require a more complex measurement procedure. Therefore, different workpieces that may appear similar in their capture images may be excluded from similarity when the possibly matching representations are identified.

Identifying at least one similar possibly matching representation from the plurality of representations stored in the database and including it/them in the possibly matching representations has the advantage that not only information on the identified at least one assigned possibly matching representation is output. Rather, a plurality of possibly matching representations is identified including similar representations which, therefore, correspond to similar types of workpieces. For this reason, a user or a machine (such as a computer comprising artificial intelligence) can select one of the identified possibly matching representations as the representation of the workpiece to be measured and the correctness of the identification of the workpiece is increased. In most cases, errors of the selection can be excluded completely. The identification of the possibly matching representations covers similar types of workpieces, so that any error of identifying a non-matching representation when identifying an assigned possibly matching representation based on the assignment information by assessing the at least one capture image can be compensated by identifying at least one similar possibly matching representation and by the selection of the similar possibly matching representation or by the selection of one of the similar possibly matching representations.

This is true in both cases, if the representation of the workpiece to be measured (i) is or (ii) is not one of the at least some of the plurality of representations that has been assigned to at least one image of a workpiece based on a selection result of a selection that was made earlier. In case (i), the identified assigned possibly matching representation(s) do/does not match the workpiece to be measured, for example because the at least one capture image of the workpiece to be measured is different from the at least one image based on which the assignment information has been established. In case (ii), there was no image based on which the assignment information was established that shows the workpiece to be measured, although a representation of the workpiece to be measured is stored in the database. These two cases correspond to the fact that not necessarily all representations of workpieces types stored in the database are representations to which at least one image of a workpiece was assigned based on a selection result of a selection that was made earlier resulting in a corresponding part of the assignment information.

While performing the step of automatically identifying at least one possibly matching representation based on the assignment information by assessing the at least one capture image, at least one similar image is determined that is similar to the at least one capture image and at least one representation of a workpiece, which at least one representation has been assigned to the at least one similar image according to the assignment information, is identified as possibly matching representation(s). Correspondingly, the identification device is adapted to determine at least one similar image that is similar to the at least one capture image and to identify at least one representation of a workpiece as possibly matching representation(s), which at least one representation has been assigned to the at least one similar image according to the assignment information. Determining at least one similar image includes the cases that the image is determined indirectly, for example based on image features that have been extracted from an existing image, and that the visual appearance of a workpiece is determined and defined by any suitable definition.

In particular any method of identifying similar images can be performed. There are many methods known in the art of digital image evaluation or image processing that can be performed. Examples will be described later.

Prior to the step of automatically identifying at least one possibly matching representation based on the assignment information by assessing the at least one capture image, the identification device may be provided with rules of determining similar images that are similar to the at least one capture image and/or may be trained to determine the similar images, wherein training of the identification device in particular comprises providing a plurality of images (or information on the images, such as features) of workpieces including images similar to each other. Correspondingly, the arrangement may comprise an instruction device that is combined with the identification device, the instruction device being adapted to provide the identification device with rules of determining similar images that are similar to the at least one capture image and/or being adapted to train the identification device to determine the similar images, wherein training of the identification device comprises providing a plurality of images of workpieces including similar images to the identification device.

In the training and/or by providing the rules, predefined constraints can be taken into account. For example, a user may set the constraint that certain workpieces or images of workpieces result in the same representation to be identified or result in different representations. The constraint that the same representation is to be identified may be set, because the same measurement procedure shall be performed for these workpieces.

In particular, the images, based on which the selection results of selections that were made earlier and that resulted in the assignment of representations of workpieces, may be stored in a database, which may be the same database in which the representations of workpieces are stored or maybe a different database. The identification device may then identify the at least one capture image of the workpiece to be measured as an image similar to at least one of the images stored in the database. This procedure can be performed in both of cases (i) and (ii) mentioned above. Its execution therefore does not depend on the question if the workpiece to be measured (i) is or (ii) is not represented by one of the at least some of the plurality of representations that have been assigned to at least one existing image of a workpiece. In case (ii), a similar image is identified, although it does not show the same type of workpiece as the workpiece to be measured. As will be described in more detail later, the same representation of a workpiece may be assigned to a plurality of the existing images and these existing images (or information on them) may be grouped or classified to form a group or class of images. For example, the plurality of existing images may be images of the same workpiece captured under different conditions. The plurality of existing images may be used to improve the reliability of the identification of the possibly matching representations, in particular by determining for at least some of the plurality of existing images in the same group or class if they are similar to at least one of the capture images of a workpiece to be measured.

As described above, the step of identifying the possibly matching representations includes identifying at least one assigned possibly matching representation and identifying at least one similar possibly matching representation. This step and an identification device that is adapted to perform this step therefore comprise/perform two stages. These two stages can be performed by a single unit of the identification device or by two separate unit of the identification device. The unit or each unit can be, for example, a computer or computer network. The operation of the unit(s) can be controlled by corresponding computer software. The computer or the computer network can optionally be adapted to control the operation of the coordinate measuring machine in order to obtain coordinates of the workpiece to be measured, for example as defined in a predefined measurement procedure as mentioned above.

The method may comprise the further step of receiving a selection signal that comprises information about a selection of a single selected representation, which selected representation has been selected from the possibly matching representations in consideration of the at least one capture image of the workpiece to be measured and/or in consideration of the workpiece to be measured. The arrangement may comprise a reception interface adapted to receive this selection signal. In addition, the method may comprise in the step of outputting an indication signal that indicates the selected representation. The arrangement may comprise an indication signal output device adapted to output the indication signal.

In particular based on the indication signal, the selection of the single selected representation, i.e. the selection of a single representation from the possibly matching representations can be used to assign the single selected representation to the at least one capture image of the workpiece to be measured. Corresponding additional assignment information, can be added to the existing assignment information. Therefore, the assignment information may be updated by adding information on an assignment of the selected representation to the at least one capture image of the workpiece to be measured. Correspondingly, the arrangement may further comprise an updating device adapted to update the assignment information by adding information on an assignment of the selected representation to the at least one capture image of the workpiece to be measured.

Updating the assignment information and/or training of the identification device may be scheduled and/or may be performed regularly. For example, updating and/or training may be performed every time when a representation has been selected from the possibly matching representations, when a predefined number of selections have been made and/or at regular time intervals.

Optionally, the at least one capture image can be stored in the database mentioned above in which existing images of workpieces are stored. In addition or alternatively, the at least one capture image can be added to a group or class of existing images as mentioned above. If the at least one capture image is added to an existing group or class may be decided based on an evaluation result evaluating similarity of the at least one capture image to existing images. For example if a measure of the similarity exceeds a predefined value, the at least one capture image is added to an existing group or class. Otherwise, it is not added and optionally a new group or class is generated which includes the at least one capture image. Instead of images, information on the images can be stored in order to evaluate similarity of the images.

In addition or alternatively, in particular based on the indication signal, the information about the selection of the single selected representation can be used to trigger and/or perform the procedure of measuring the workpiece to be measured by using the coordinate measuring machine. In particular, the method may further comprise a step of automatically loading, based on the indication signal that indicates the selected representation, information on a predefined measurement procedure, that has been predefined for measuring the workpiece to be measured, and measuring the workpiece to be measured according to the predefined measurement procedure using the coordinate measuring machine. Correspondingly, the arrangement may comprise a controller for controlling measurement operation of the coordinate measuring machine, wherein the controller is adapted to load, based on the indication signal that indicates the selected representation, information on a predefined measurement procedure that has been predefined for measuring the workpiece to be measured and the controller is adapted to control measurement of the workpiece to be measured according to the loaded information on the predefined measurement procedure by the coordinate measuring machine. Information on the predefined measurement procedure and on further predefined measurement procedures for measuring different types of workpieces as the workpiece to be measured may be stored in the database mentioned above or may be stored in a different database. It is preferred that the controller of the coordinate measuring machine has direct access to the database in which the information on the predefined measurement procedure is stored. In particular, direct access includes the case that this database is part of a computer or of another data processing device of the coordinate measuring machine, wherein the computer may implement the controller as well.

Generally, not only related to this computer, a computer may include a single or a plurality of data processing units, such as units organized as different cores of the same central processing unit and/or organized in different central processing units of the same hardware unit. In particular, a hardware unit may be completely comprised by a single housing or by a single rack or single compartment. This does not exclude that the computer has access to a computer network in order to transfer data to other units of the network and/or to receive data from the other units. In particular, a computer cluster and/or data cloud may be used. For example, at least one computer or data processing unit may comprise or consists of at least one microcontroller, microprocessor, integrated circuit (e.g. a FPGA, Field Programmable Gate Array), CPU (Central Processing Unit), and/or GPU (Graphical Processing Unit).

Examples of the present invention will be described in the following with reference to the attached figures. The figures show:
- Fig. 1: an arrangement with a coordinate measuring machine and at least one computer,
- Fig. 2: schematically a typical procedure of designing and measuring a workpiece,
- Fig. 3: schematically steps of a method of identifying the possibly matching representations,
- Fig. 4: a more detailed illustration of the method shown in Fig. 3,
- Fig. 5: steps of an example of training an identification device and
- Fig. 6: steps of an example of generating the predefined similarity information based on which at least one similar possibly matching representation is identified as similar to the at least one assigned possibly matching representation.

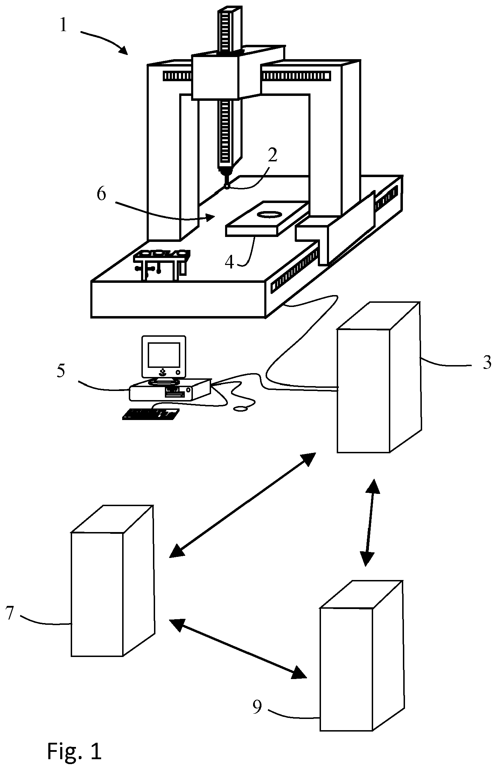

Fig. 1 shows an arrangement with a coordinate measuring machine 1 that comprises a sensor 2 adapted to measure a workpiece and thereby generating coordinates of the workpiece. Although a tactile sensor is schematically shown in Fig. 1, the coordinate measuring machine 1 may comprise in addition or alternatively a sensor of another type, such as an optical sensor. The coordinate measuring machine 1 is also combined with a computer 3 or may comprise the computer 3. In the specifically illustrated embodiment, the coordinate measuring machine 1 further comprises a second computer 5 that is adapted to provide a user (i.e. a person) access to the coordinate measuring machine 1. In particular, the operation of the coordinate measuring machine 1 can be initiated or manually controlled via the second computer 5. The first computer 3 includes a controller which automatically controls the operation of the coordinate measuring machine 1, in particular the movement of any movable part in order to position and/or direct at least one measurement sensor of the coordinate measuring machine 1, as for example the measurement sensor 2. The controller may operate according to an inspection plan and/or measurement plan predefined in relation to the workpiece 4 to be measured. The first computer 3 may also perform other functions in connection with the present invention, and in particular may comprise the identification device which automatically identifies the possibly matching representations of the workpiece 4 to be measured which is placed in a working space 6 of the coordinate measuring machine 1.

Fig. 1 also shows a third computer 7 and a fourth computer 9 which may be located remote from the coordinate measuring machine 1, for example connected via the Internet or via another computer network to the first computer 3. The third computer 7 and/or the fourth computer 9 may be adapted to train devices realized by the first computer 3, for example according to at least one of the training processes mentioned above and/or below. At least one and preferably all of the first, third and fourth computer 3, 7, 9 may comprise a database and/or storage units of at least one database. The database(s) may store the plurality of representations of workpieces from which representations possibly matching the workpiece 4 are identified by the identification device. The plurality of representations is preferably stored in a database of the first computer 3, i.e. at the location of the coordinate measuring machine 1. In particular images of different workpieces to which at least some of the plurality of representations have been assigned and/or predefined measurement procedures can be stored in the same database or in another 1 of the databases mentioned.

The arrangement shown in Fig. 1 is an example and several modifications can be made. For example, at least one of the second computer 5, the third computer 7 and the fourth computer 9 can be omitted or at least one further computer can be added. In addition or alternatively, at least one of the functions described above with reference to the first computer 3 can be performed by a computer remote from the coordinate measuring machine 1. The type of coordinate measuring machine may be different.

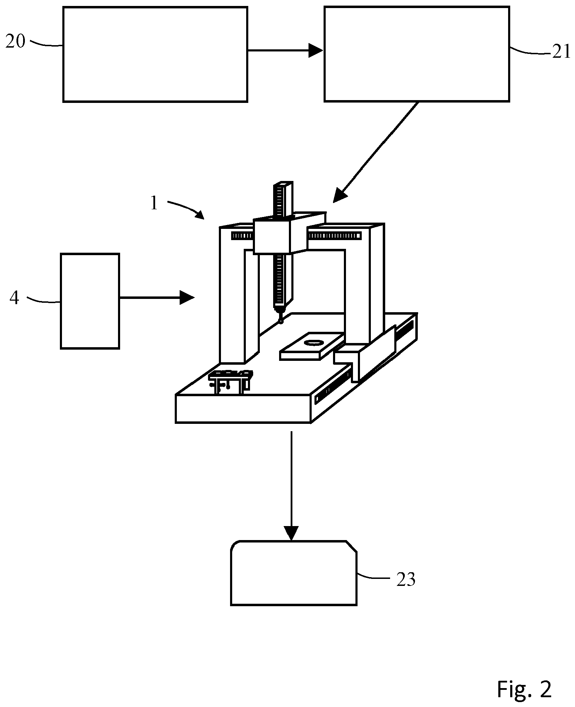

Fig. 2 schematically shows a flowchart illustrating a typical procedure. In step 20, a workpiece is designed, for example by generating a CAD model of the workpiece. Information about the design is input of the following step 21, in which a measurement procedure is defined, such as a measurement plan and/or inspection plan. Typically, steps 20 and 21 are repeated several times for each workpiece which may be produced and measured.

When the measurement of a specific workpiece, 4 is to be performed, such as the workpiece 4 shown in Fig. 1 and schematically on the left-hand side of Fig. 2, the corresponding measurement procedure defined in step 21 is to be identified. This can be done manually by a technician or engineer or can be done automatically. The present invention supports the identification of the required predefined measurement procedure, by automatically identifying representations of workpieces which representations are possibly matching the workpiece to be measured and by outputting corresponding output information. Then, the measurement of the workpiece 4 to be measured can be performed by a coordinate measuring machine, such as the coordinate measuring machine shown in Fig. 1, and a measurement report 23 can be output.

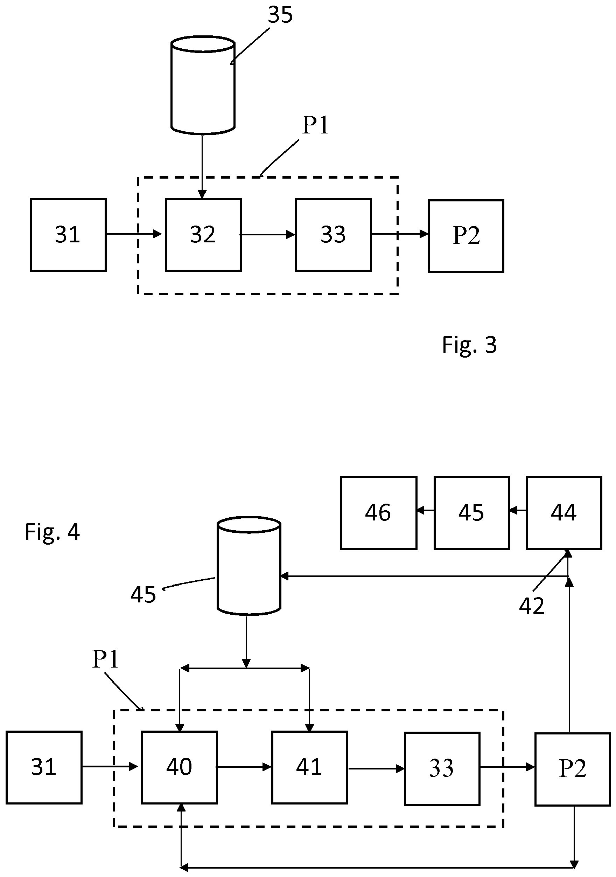

An illustration of a method of identifying the possibly matching representations is schematically shown in Fig. 3. A plurality of representations of a workpiece is stored in a database 35. At least one image 31, in particular two-dimensional image(s), of a workpiece to be measured is input to a process denoted by P1. In process step 32 (which can be considered alternatively as device 32), a plurality of possibly matching representations is identified from the representations stored in the database 35 and these possibly matching representations 33 are output. Block P2 represents the selection of one of the possibly matching representations 33, for example by a user (person) or by a selection device, such as a computer or computer network provided with artificial intelligence. Since a plurality of possibly matching representations has been identified from a larger number of stored representations, the selection is supported and facilitated.

The method will be described in more detailed with reference to Fig. 4 which shows the same blocks as Fig. 3 with the exception of step 32 or device 32 that is split up into two steps 40 and 41 or devices 40 and 41. In the following, the description only relates to the steps 40, 41, but this also defines the corresponding arrangement that is adapted to perform the steps by the devices 40, 41.

The database 45 or a plurality of databases 45 shown in Fig. 4 not only stores the representations of workpieces, but also stores existing images of workpieces and/or also stores features of existing images of workpieces. The features may have been extracted from the existing images of workpieces. The purpose of existing images and/or their features is to allow for the identification of those existing images of workpieces that are similar to the at least one image of the workpiece to be measured. Although preferred, not all of the existing images may have been captured by using an image capturing device. It is also possible that at least one of the existing images or all of the existing images and/or their features have been generated for each type of workpiece from a model of the workpiece, such as a CAD model. Therefore, more generally speaking, information on the visual appearance of workpieces is used to identify from the at least one capture image of the workpiece to be measured the corresponding class and to identify the representation of the workpiece that has been assigned to the class. In this more generalized form, the class may not comprise real images. The class may just represent the visual appearance of a specific type of workpiece. However, for simplicity, the description of the identification steps and devices relates to existing images and classes containing existing images in the following.

In step 40, it is identified which existing images are similar to the at least one image of the workpiece to be measured and, furthermore, it is identified which representation(s) of workpieces stored in the database(s) 45 has/have been assigned to the identified existing image(s). The identification is therefore based on existing assignment information. The corresponding assignment information may also be stored in the database(s) 45. In addition or alternatively, it may be stored in a data storage of the identification device which performs step 40.

The identification of existing image(s) may result in a single existing image or in existing images that all belong to the same class or group of existing images. In this case, the identification of the representations of workpieces results in a single assigned possibly matching representation of a workpiece, since there is only one assigned possibly matching representation. The previous assignment of representations to existing images was done in a way that assigns only one representation to one existing image or to one class or group of existing images. This is based on the finding that there is only one correct type of workpiece for each existing image or class of existing images and that it would not improve the identification of the workpiece to be measured if no representation of a workpiece is assigned to an existing image. Each class of existing images may comprise different images of the same workpiece type, for example images captured from different viewing directions and/or images captured under different circumstances, such as different states of the ambience and/or different image capturing devices.

Alternatively, the identification of existing image(s) may result in a plurality of existing images that do not belong to the same class or group of existing images. In this case, the identification of the representations of workpieces results in a plurality of assigned possibly matching representations of workpieces.

In step 41, at least one similar possibly matching representation is identified which is similar to the at least one assigned possibly matching representation identified in step 40. This step improves the basis for the selection of the workpiece to be measured from the possibly matching representations, especially if the at least one capture image of the workpiece to be measured (that was input to step 40) did not result in the correct identification of an existing image of the type of the workpiece to be measured, although such an existing image was (or its features were) actually available in the database, but resulted in the identification of an existing image of another type of workpieces. There are several possible reasons why the identification of the correct existing image or class of images might fail: During capture of images, the ambient conditions, the viewing angle, the viewing direction and/or the image capturing device may be different.

Step 41 also improves the basis for the selection of the workpiece to be measured from the possibly matching representations if there is no existing image in the database or if there are no features of an existing image in the database, which existing image shows the type of the workpiece to be measured. However, even in this case there is a representation of the workpiece to be measured in the database or one of the databases, since otherwise the setting would be incomplete. The complete setting requires that a workpiece to be measured is only to be identified if there is a corresponding representation of the type of the workpiece. A complete setting can easily be achieved in the course of each quality management procedure. If there is no existing image that shows the type of the workpiece to be measured, the selection that is made in step P2 or according to block P2 can be used to add information to the database(s), as indicated by corresponding arrows in Fig. 4. In particular, the at least one capture image of the workpiece to be measured can be added to the existing images for future execution of step 40. Furthermore, the information on the assignment of the representation of the workpiece to be measured (as selected in step/block P2) to the at least one capture image can be added to the assignment information for future execution of step 40.

There is a further 44 in Fig. 4 that represents a device that comprises a reception interface 42 for receiving the selection signal from block P2 that comprises information about a selection of a single selected representation. The device 44 is adapted to output - via indication signal output device 45 - an indication signal that indicates the selected representation. The indication signal is received by a controller 46 of the coordinate measuring machine. The controller 46 is adapted to load, based on the indication signal that indicates the selected representation, information on a predefined measurement procedure that has been predefined for measuring the workpiece to be measured and the controller is adapted to control measurement of the workpiece to be measured according to the loaded information on the predefined measurement procedure by the coordinate measuring machine. The information on the predefined measurement procedure may be loaded from the database 45, for example.

The device 40 which performs the corresponding step illustrated in Fig. 4 can be trained before the step is performed for the first time based on existing images or corresponding features. It is preferred to train the device 40 repeatedly, in particular after adding information on further existing images.

When training the device 40 or another identification device that identifies a class by assessing at least one capture image of a workpiece to be measured, a model (such as a computer model) can be trained. The model may define an identification procedure that is based on predefined identification rules and/or may be based on machine learning. In the following, examples are described.

A first example relates to the training of the process of deciding to which class the at least one capture image of the workpiece to be measured belongs. During training, a plurality of decision trees of the model is evaluated by applying the decision trees to the classification of existing images (which stands, more generally speaking, again for information on the visual appearance) of workpieces. The evaluation is performed by taking into account the result of the classification, namely the known assignment of a representation of the workpiece to the existing image or class of existing images. The training process may be performed recursively based on the same existing images or on an increasing number of existing images. In particular, the result of the training may be to output for each capture image or set of capture images a measure of the likelihood that it belongs to one of the existing classes of the visual appearance of workpieces.

Up to this point, the training may be performed only based on test images to which a representation of a workpiece has been assigned. In a following phase of the training, the model may be tested based on at least one image of a workpiece to which no representation of a workpiece has been assigned yet. The testing may be performed recursively based on the same test images or based on an increased number of test images comprising partially the same test images. The repeated execution of the testing cycle may shift the at least one test image from one class to another class. At the end of the execution of the testing cycles, the at least one test image is finally allocated to one of the classes.

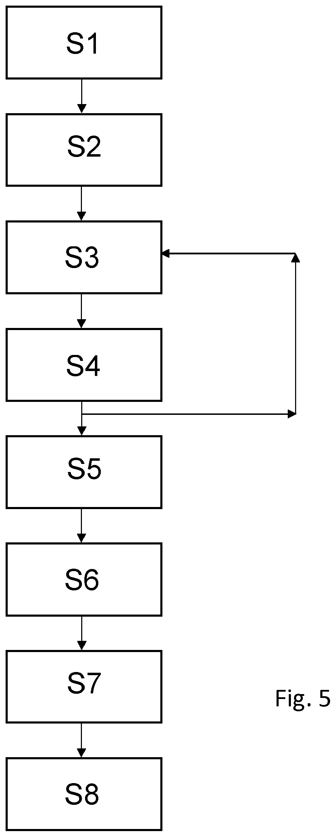

An example of the training is described with reference to Fig. 5. In a first step S1, pairs of existing images and corresponding classes are generated as input for the training. Each pair comprises one existing image (in general: information on the visual appearance) of a workpiece and the corresponding class to which the representation of the workpiece is assigned. In the following step S2, the generated pairs are split into two sets of the pairs, wherein each pair only belongs to one of the sets. In the following step S3, a first set of the pairs is used to determine a model prediction for the allocation of the pair elements. In the following step S4, the model prediction is evaluated using a second set of the pairs and a measure for the accuracy of the model prediction is calculated.

The steps S3 and S4 are repeated until a criterion on convergence is fulfilled with respect to the accuracy of the model prediction. If the criterion is not yet fulfilled, the steps S3 and S4 are repeated again, thereby adapting model parameters. Otherwise, the final step S5 of the training phase is performed in which the model parameters found are output.

In the following step S6, the testing phase starts with the generation of test images of workpieces, preferably by using the image capturing device or image capturing devices of the coordinate measuring machine which are to be used for the identification of workpieces to be measured. The corresponding class of the images is not yet known, i.e. there are not yet pairs as for the training phase.

In the following step S7, the model prediction is calculated for each of the test images. In the final step S8, the calculated model predictions are compared to the actual classes to which the test images belong. The comparison may result in the approval of the model or in the refusal of the model.

It is an advantage of the training and testing method described before that it requires little time and little computing power when performed by a computer or by a computer network.

According to another example of the identification device, the model comprises a neural network implemented by a computer or computer network. Preferably, the neural network is trained using pairs as generated according to step S1 of Fig. 4. There are many known methods of training neural networks that can be applied. As soon as the neural network has been trained, it can be used to identify the class corresponding to any capture image or capture images of a workpiece to be measured. It is also possible to repeat training of the neural network after adding further existing images to the ones stored in the database(s).

There are further methods of training any kind of model of the identification device. The training might include using not all existing images and their corresponding classes, but only a reduced number of them in the final step of training. The training may start using all existing images and their corresponding classes in order to find initial values of the model parameters. In the final step of the training, the initial values of the model parameters are improved using the reduced number of pairs of existing images and their corresponding classes.

In addition or alternatively, instead of determining model parameters and improving the model accuracy by varying the model parameters, non-parametric models can be used. In particular, these models can be optimized based on a smaller number of the pairs by determining the nearest neighbour by considering features that have been extracted from a larger number of the pairs.

In the following, examples of generating the predefined similarity information are described. The similarity information is the information based on which at least one similar possibly matching representation is identified as similar to the at least one assigned possibly matching representation.

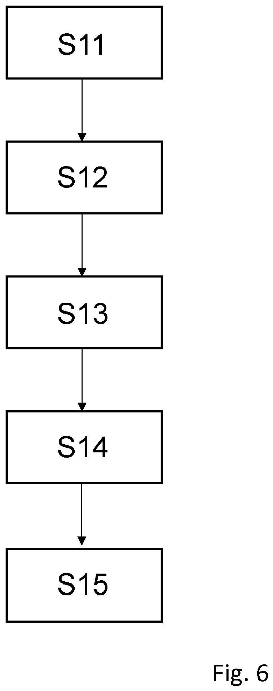

According to a first example, the representations are three-dimensional models (in particular CAD models) of in each case one type of workpiece or relate to these three-dimensional models. Steps of a specific example will be described with reference to Fig. 6:
In a first step S11, the three-dimensional models that may be stored in a database are accessed. In a following step S12, two-dimensional images are rendered from each of the three-dimensional models, wherein the two-dimensional images in particular represent views of the modelled workpiece in different viewing directions, for example including the views from opposite sides onto the workpiece. Alternatively to views, the two-dimensional images may be radiographs, i.e. images based on projections through the modelled workpiece like X-ray projections.

Then, in a following step S13, features are extracted from each of the two-dimensional images, which features characterize the respective image. For example, the features can be generated by forming and/or by assessing pixel level information. In particular, digital representation of objects frequently relies on describing their shape. Such information can be computed as a collection of edges. E.g., edge information at each pixel's neighbourhood can be organized as a histogram of oriented gradients or features extracted from deep neural networks.

The features extracted from the different two-dimensional images of the same modelled workpiece are then combined with each other (step S14), for example by concatenation, in particular to form an ordered chain of features or a vector comprising the features as vector components, or by forming just a set. In a following step, the similarity of the combinations of features is determined or at least a measure of similarity is defined (step S15). For example in case of a feature vector or another ordered chain of features, the similarity measure may be the distance, such as the Euclidean distance.

A corresponding procedure can be performed if the representations are or relate to two-dimensional images of workpieces. If there is a plurality of two-dimensional images per workpiece, the same approach as described above with respect to the rendered images can be applied. If there is a single two-dimensional image per workpiece, the same approach can be applied, except for the combination of the features of different images of the same modelled workpiece.

Another example relates to the case that the representations are or relate to three-dimensional models of workpieces, wherein the models comprise or are based on point clouds, similar to point clouds that are retrieved by computed tomography (CT), or the point clouds are generated by rendering point clouds from three-dimensional models of workpieces. However, the point clouds considered here are typically modelled point clouds that are not based on the results of measurements. Without rendering two-dimensional images, features of the point cloud of each modelled workpiece can be extracted and the same approach as described above can be applied in order to obtain a measure of similarity.

## Claims

1. A method of measuring a workpiece to be measured by using a coordinate measuring machine, the method including the steps:
- placing the workpiece (4) to be measured in a working space (6) of the coordinate measuring machine,
- capturing at least one capture image of the workpiece (4) to be measured while the workpiece (4) is placed in the working space (6),
- accessing assignment information on assignments of at least some of a plurality of representations of workpieces to images of workpieces, the plurality of representations being stored in a database (35; 45), wherein each of the at least some of the plurality of representations has been assigned to at least one image of a workpiece based on a selection result of a selection that was made earlier resulting in a corresponding part of the assignment information,
- automatically identifying possibly matching representations (33) that are possibly matching the workpiece (4) to be measured from the plurality of representations stored in the database (35; 45),
- outputting output information about the possibly matching representations (33) that have been identified,
wherein the step (32) of identifying the possibly matching representations (33) includes
- determining at least one similar image that is similar to the at least one capture image and
- identifying (40) at least one representation of a workpiece, which at least one representation has been assigned to the at least one similar image according to the assignment information, as at least one assigned possibly matching representation and
- identifying (41) at least one similar possibly matching representation that is identified as similar to the at least one assigned possibly matching representation based on predefined similarity information,
wherein the possibly matching representations (33) comprise the at least one assigned possibly matching representation and the at least one similar possibly matching representation.

2. The method of claim 1, further comprising steps of
- receiving a selection signal that comprises information about a selection of a single selected representation, which selected representation has been selected from the possibly matching representations in consideration of the at least one capture image of the workpiece (4) to be measured and/or in consideration of the workpiece (4) to be measured,
- outputting an indication signal that indicates the selected representation.

3. The method of claim 2, wherein the assignment information is updated by adding information on an assignment of the selected representation to the at least one capture image of the workpiece (4) to be measured.

4. The method of claim 2 or 3, further comprising a step of automatically loading, based on the indication signal that indicates the selected representation, information on a predefined measurement procedure that has been predefined for measuring the workpiece (4) to be measured and measuring the workpiece (4) to be measured according to the predefined measurement procedure using the coordinate measuring machine.

5. The method of one of claims 1 to 4, wherein, prior to the step of identifying the at least one possibly matching representation from the plurality of representations stored in the database (35; 45), performing a step of generating the predefined similarity information based on assessing features of workpieces.

6. The method of one of claims 1 to 5, wherein, prior to the step of automatically identifying at least one possibly matching representation based on the assignment information by assessing the at least one capture image, an identification device that is intended to perform the step of automatically identifying is
- provided with rules of determining similar images that are similar to the at least one capture image and/or
- trained to determine the similar images, wherein training of the identification device comprises providing a plurality of images of workpieces including similar images.

7. An arrangement comprising a coordinate measuring machine and an identification device for identifying a representation of a workpiece (4) to be measured, wherein
- the arrangement further comprises at least one image capturing device, the image capturing device being adapted to capture at least one capture image of the workpiece (4) to be measured while the workpiece (4) to be measured is placed in a working space (6) of the coordinate measuring machine,
- wherein the identification device (32) comprises an interface to a database (35; 45) and is adapted to access assignment information on assignments of at least some of a plurality of representations of workpieces to images of workpieces, the plurality of representations being stored in the database (35; 45), wherein each of the at least some of the plurality of representations has been assigned to at least one image of a workpiece based on a selection result of a selection that was made earlier resulting in a corresponding part of the assignment information,
- the identification device (32) is adapted to automatically identify possibly matching representations (33) that are possibly matching the workpiece (4) to be measured from the plurality of representations stored in the database (35; 45),
- the identification device (32) is adapted for, while identifying the possibly matching representations (33),
i) determining at least one similar image that is similar to the at least one capture image and
ii) identifying (40) at least one representation of a workpiece, which at least one representation has been assigned to the at least one similar image according to the assignment information, as at least one assigned possibly matching representation and
iii) identifying (41) at least one similar possibly matching representation that is identified as similar to the at least one assigned possibly matching representation based on predefined similarity information,
wherein the possibly matching representations (33) comprise the at least one assigned possibly matching representation and the at least one similar possibly matching representation.

8. The arrangement of claim 7, further comprising:
- a reception interface (42) for receiving a selection signal that comprises information about a selection of a single selected representation, which selected representation has been selected from the possibly matching representations (33) in consideration of the at least one capture image of the workpiece (4) to be measured and/or in consideration of the workpiece (4) to be measured,
- an indication signal output device (45) adapted to output an indication signal that indicates the selected representation.

9. The arrangement of claim 8, wherein the arrangement further comprises an updating device adapted to update the assignment information by adding information on an assignment of the selected representation to the at least one capture image of the workpiece (4) to be measured.

10. The arrangement of claim 8 or 9, wherein the arrangement further comprises a controller (46) for controlling measurement operation of the coordinate measuring machine, wherein the controller (46) is adapted to load, based on the indication signal that indicates the selected representation, information on a predefined measurement procedure that has been predefined for measuring the workpiece (4) to be measured and the controller (46) is adapted to control measurement of the workpiece (4) to be measured according to the loaded information on the predefined measurement procedure by the coordinate measuring machine.

11. The arrangement of one of claims 7 to 10, wherein the arrangement further comprises a generation device adapted to generate the predefined similarity information based on assessing features of workpieces.

12. The arrangement of one of claims 7 to 11, wherein the arrangement further comprises an instruction device that is combined with the identification device, the instruction device being adapted to
- provide the identification device with rules of determining similar images that are similar to the at least one capture image and/or
- train the identification device to determine the similar images, wherein training of the identification device comprises providing a plurality of images of workpieces including similar images to the identification device.

## Patentansprüche

1. Verfahren zum Vermessen eines zu vermessenden Werkstücks unter Verwendung einer Koordinatenmessmaschine, wobei das Verfahren die folgenden Schritte beinhaltet:
- Platzieren des zu vermessenden Werkstücks (4) in einem Betriebsbereich (6) der Koordinatenmessmaschine,
- Aufnehmen mindestens eines Aufnahmebildes des zu vermessenden Werkstücks (4), während das Werkstück (4) im Betriebsbereich (6) platziert ist,
- Zugreifen auf Zuordnungsinformationen über Zuordnungen von mindestens einigen einer Vielzahl von Repräsentationen von Werkstücken zu Bildern von Werkstücken, wobei die Vielzahl von Repräsentationen in einer Datenbank (35; 45) gespeichert ist, wobei jede der mindestens einigen aus der Vielzahl von Repräsentationen mindestens einem Bild eines Werkstücks auf der Grundlage eines Auswahlergebnisses einer Auswahl zugeordnet wurde, die zuvor getroffen wurde, was zu einem entsprechenden Teil der Zuordnungsinformationen führt,
- automatisches Identifizieren von möglicherweise passenden Repräsentationen (33), die möglicherweise zum zu vermessenden Werkstück (4) passen, aus der Vielzahl der in der Datenbank (35; 45) gespeicherten Repräsentationen,
- Ausgeben von Ausgabeinformationen über die möglicherweise passenden Repräsentationen (33), die identifiziert wurden,
wobei der Schritt (32) des Identifizierens der möglicherweise passenden Repräsentationen (33) folgende Vorgänge beinhaltet:
- Bestimmen mindestens eines ähnlichen Bildes, das dem mindestens einen Aufnahmebild ähnlich ist, und
- Identifizieren (40) mindestens einer Repräsentation eines Werkstücks, die dem mindestens einen ähnlichen Bild gemäß den Zuordnungsinformationen zugeordnet wurde, als mindestens eine zugeordnete, möglicherweise passende Repräsentation, und
- Identifizieren (41) mindestens einer ähnlichen, möglicherweise passenden Repräsentation, die als ähnlich zur mindestens einen zugeordneten, möglicherweise passenden Repräsentation identifiziert wurde, auf der Grundlage von vordefinierten Ähnlichkeitsinformationen,
wobei die möglicherweise passenden Repräsentationen (33) die mindestens eine zugeordnete, möglicherweise passende Repräsentation und die mindestens eine ähnliche, möglicherweise passende Repräsentation umfassen.

2. Verfahren nach Anspruch 1, ferner umfassend folgende Schritte:
- Empfangen eines Auswahlsignals, das Informationen über eine Auswahl einer einzelnen ausgewählten Repräsentation umfasst, wobei die ausgewählte Repräsentation unter Berücksichtigung des mindestens einen Aufnahmebildes des zu vermessenden Werkstücks (4) und/oder unter Berücksichtigung des zu vermessenden Werkstücks (4) aus den möglicherweise passenden Repräsentationen ausgewählt wurde,
- Ausgeben eines Signals, das die ausgewählte Repräsentation angibt.

3. Verfahren nach Anspruch 2, wobei die Zuordnungsinformationen durch Hinzufügen von Informationen über eine Zuordnung der ausgewählten Repräsentation zum mindestens einen Aufnahmebild des zu vermessenden Werkstücks (4) aktualisiert werden.

4. Verfahren nach Anspruch 2 oder 3, ferner umfassend einen Schritt des automatischen Ladens, auf der Grundlage des Angabesignals, das die ausgewählte Repräsentation angibt, von Informationen über ein vordefiniertes Messverfahren, das für das Vermessen des zu vermessenden Werkstücks (4) vordefiniert wurde, und des Vermessens des zu vermessenden Werkstücks (4) gemäß dem vordefinierten Messverfahren unter Verwendung der Koordinatenmessmaschine.

5. Verfahren nach einem der Ansprüche 1 bis 4, wobei vor dem Schritt des Identifizierens der mindestens einen möglicherweise passenden Repräsentation aus der Vielzahl von in der Datenbank (35; 45) gespeicherten Repräsentationen ein Schritt des Erzeugens der vordefinierten Ähnlichkeitsinformationen auf der Grundlage des Bewertens von Merkmalen von Werkstücken durchgeführt wird.

6. Verfahren nach einem der Ansprüche 1 bis 5, wobei vor dem Schritt des automatischen Identifizierens mindestens einer möglicherweise passenden Repräsentation auf der Grundlage der Zuordnungsinformationen durch Bewerten des mindestens einen Aufnahmebildes für eine Identifizierungsvorrichtung, die den Schritt des automatischen Identifizierens durchführen soll, folgende Vorgänge durchgeführt werden:
- Bereitstellen von Regeln zum Bestimmen ähnlicher Bilder, die dem mindestens einen Aufnahmebild ähnlich sind, und/oder
- Trainieren zum Bestimmen der ähnlichen Bilder, wobei das Trainieren der Identifizierungsvorrichtung das Bereitstellen einer Vielzahl von Bildern von Werkstücken umfasst, die ähnliche Bilder beinhalten.

7. Anordnung, umfassend eine Koordinatenmessmaschine und eine Identifizierungsvorrichtung zum Identifizieren einer Repräsentation eines zu vermessenden Werkstücks (4), wobei
- die Anordnung ferner mindestens eine Bildaufnahmevorrichtung umfasst, wobei die Bildaufnahmevorrichtung dazu eingerichtet ist, mindestens ein Aufnahmebild des zu vermessenden Werkstücks (4) aufzunehmen, während das zu vermessende Werkstück (4) in einem Betriebsbereich (6) der Koordinatenmessmaschine platziert ist,
- wobei die Identifizierungsvorrichtung (32) eine Schnittstelle zu einer Datenbank (35; 45) umfasst und dazu eingerichtet ist, auf Zuordnungsinformationen über Zuordnungen von zumindest einigen einer Vielzahl von Repräsentationen von Werkstücken zu Bildern von Werkstücken zuzugreifen, wobei die Vielzahl von Repräsentationen in der Datenbank (35; 45) gespeichert ist, wobei jede der zumindest einigen der Vielzahl von Repräsentationen zumindest einem Bild eines Werkstücks auf der Grundlage eines Auswahlergebnisses einer Auswahl, die zuvor getroffen wurde, was zu einem entsprechenden Teil der Zuordnungsinformationen führt, zugeordnet wurde,
- die Identifizierungsvorrichtung (32) dazu eingerichtet ist, möglicherweise passende Repräsentationen (33), die möglicherweise zum zu vermessenden Werkstück (4) passen, aus der Vielzahl von in der Datenbank (35; 45) gespeicherten Repräsentationen automatisch zu identifizieren,
- die Identifizierungsvorrichtung (32) dazu eingerichtet ist, während des Identifizierens der möglicherweise passenden Repräsentationen (33) folgende Vorgänge durchzuführen:
i) Bestimmen mindestens eines ähnlichen Bildes, das dem mindestens einen Aufnahmebild ähnlich ist, und
ii) Identifizieren (40) mindestens einer Repräsentation eines Werkstücks, die dem mindestens einen ähnlichen Bild gemäß den Zuordnungsinformationen zugeordnet wurde, als mindestens eine zugeordnete, möglicherweise passende Repräsentation, und
iii) Identifizieren (41) mindestens einer ähnlichen, möglicherweise passenden Repräsentation, die als ähnlich zur mindestens einen zugeordneten, möglicherweise passenden Repräsentation identifiziert wurde, auf der Grundlage von vordefinierten Ähnlichkeitsinformationen, wobei die möglicherweise passenden Repräsentationen (33) die mindestens eine zugeordnete, möglicherweise passende Repräsentation und die mindestens eine ähnliche, möglicherweise passende Repräsentation umfassen.

8. Anordnung nach Anspruch 7, ferner umfassend:
- eine Empfangsschnittstelle (42) zum Empfangen eines Auswahlsignals, das Informationen über eine Auswahl einer einzelnen ausgewählten Repräsentation umfasst, wobei die ausgewählte Repräsentation unter Berücksichtigung des mindestens einen Aufnahmebildes des zu vermessenden Werkstücks (4) und/oder unter Berücksichtigung des zu vermessenden Werkstücks (4) aus den möglicherweise passenden Repräsentationen (33) ausgewählt wurde,
- eine Angabesignalausgabevorrichtung (45), die dazu eingerichtet ist, ein Angabesignal auszugeben, das die ausgewählte Repräsentation angibt.

9. Anordnung nach Anspruch 8, wobei die Anordnung ferner eine Aktualisierungsvorrichtung umfasst, die dazu eingerichtet ist, die Zuordnungsinformationen zu aktualisieren, indem Informationen über eine Zuordnung der ausgewählten Repräsentation zum mindestens einen Aufnahmebild des zu vermessenden Werkstücks (4) hinzugefügt werden.

10. Anordnung nach Anspruch 8 oder 9, wobei die Anordnung ferner eine Steuerung (46) zum Steuern des Messbetriebs der Koordinatenmessmaschine umfasst, wobei die Steuerung (46) dazu eingerichtet ist, auf der Grundlage des Angabesignals, das die ausgewählte Repräsentation angibt, Informationen über ein vordefiniertes Messverfahren zu laden, das zum Vermessen des zu vermessenden Werkstücks (4) vordefiniert wurde, und die Steuerung (46) dazu eingerichtet ist, die Vermessung des zu vermessenden Werkstücks (4) gemäß den geladenen Informationen über das vordefinierte Messverfahren durch die Koordinatenmessmaschine zu steuern.

11. Anordnung nach einem der Ansprüche 7 bis 10, wobei die Anordnung ferner eine Erzeugungsvorrichtung umfasst, die dazu eingerichtet ist, die vordefinierten Ähnlichkeitsinformationen auf der Grundlage des Bewertens von Merkmalen von Werkstücken zu erzeugen.

12. Anordnung nach einem der Ansprüche 7 bis 11, wobei die Anordnung ferner eine Anweisungsvorrichtung umfasst, die mit der Identifizierungsvorrichtung kombiniert ist, wobei die Anweisungsvorrichtung für folgende Vorgänge eingerichtet ist:
- Bereitstellen, für die Identifizierungsvorrichtung, von Regeln zum Bestimmen ähnlicher Bilder, die dem mindestens einen Aufnahmebild ähnlich sind, und/oder
- Trainieren der Identifizierungsvorrichtung zum Bestimmen der ähnlichen Bilder, wobei das Trainieren der Identifizierungsvorrichtung das Bereitstellen, für die Identifizierungsvorrichtung, einer Vielzahl von Bildern von Werkstücken umfasst, die ähnliche Bilder beinhalten.

## Revendications

1. Procédé de mesure d'une pièce à mesurer en utilisant une machine de mesure de coordonnées, le procédé incluant les étapes de :
- placement de la pièce (4) à mesurer dans un espace de travail (6) de la machine de mesure de coordonnées ;
- capture d'au moins une image de capture de la pièce (4) à mesurer tandis que la pièce (4) est placée dans l'espace de travail (6) ;
- accès à une information d'attribution concernant des attributions d'au moins certaines d'une pluralité de représentations de pièces à des images de pièces, les représentations de la pluralité de représentations étant stockées dans une base de données (35 ; 45), dans lequel chacune des au moins certaines de la pluralité de représentations a été attribuée à au moins une image d'une pièce sur la base d'un résultat de sélection d'une sélection qui a été réalisée précédemment conduisant à une partie correspondante de l'information d'attribution ;
- identification automatique de représentations éventuellement en concordance (33) qui sont éventuellement en concordance avec la pièce (4) à mesurer parmi la pluralité de représentations stockées dans la base de données (35 ; 45) ;
- émission en sortie d'une information de sortie concernant les représentations éventuellement en concordance (33) qui ont été identifiées ;
dans lequel l'étape (32) d'identification des représentations éventuellement en concordance (33) inclut :
- la détermination d'au moins une image similaire qui est similaire à l'au moins une image de capture ; et
- l'identification (40) d'au moins une représentation d'une pièce, laquelle au moins une représentation a été attribuée à l'au moins une image similaire conformément à l'information d'attribution, en tant qu'au moins une représentation éventuellement en concordance attribuée ; et
- l'identification (41) d'au moins une représentation éventuellement en concordance similaire qui est identifiée comme étant similaire à l'au moins une représentation éventuellement en concordance attribuée sur la base d'une information de similarité prédéfinie ;
dans lequel les représentations éventuellement en concordance (33) comprennent l'au moins une représentation éventuellement en concordance attribuée et l'au moins une représentation éventuellement en concordance similaire.

2. Procédé selon la revendication 1, comprenant en outre les étapes de :
- réception d'un signal de sélection qui comprend une information concernant une sélection d'une unique représentation sélectionnée, laquelle représentation sélectionnée a été sélectionnée parmi les représentations éventuellement en concordance en considération de l'au moins une image de capture de la pièce (4) à mesurer et/ou en considération de la pièce (4) à mesurer ; et
- l'émission en sortie d'un signal d'indication qui indique la représentation sélectionnée.

3. Procédé selon la revendication 2, dans lequel l'information d'attribution est mise à jour en ajoutant une information concernant une attribution de la représentation sélectionnée à l'au moins une image de capture de la pièce (4) à mesurer.

4. Procédé selon la revendication 2 ou 3, comprenant en outre une étape de chargement automatique, sur la base du signal d'indication qui indique la représentation sélectionnée, d'une information concernant une procédure de mesure prédéfinie qui a été prédéfinie pour mesurer la pièce (4) à mesurer et de mesure de la pièce (4) à mesurer conformément à la procédure de mesure prédéfinie en utilisant la machine de mesure de coordonnées.

5. Procédé selon l'une quelconque des revendications 1 à 4, dans lequel, avant l'étape d'identification de l'au moins une représentation éventuellement en concordance parmi la pluralité de représentations stockées dans la base de données (35 ; 45), la réalisation d'une étape de génération de l'information de similarité prédéfinie sur la base de l'évaluation de caractéristiques de pièces.

6. Procédé selon l'une quelconque des revendications 1 à 5, dans lequel, avant l'étape d'identification automatique d'au moins une représentation éventuellement en concordance sur la base de l'information d'attribution en évaluant l'au moins une image de capture, un dispositif d'identification qui est destiné à réaliser l'étape d'identification automatique est
- muni de règles de détermination d'images similaires qui sont similaires à l'au moins une image de capture et/ou est
- soumis à apprentissage pour déterminer les images similaires, dans lequel l'apprentissage du dispositif d'identification comprend la fourniture d'une pluralité d'images de pièces incluant des images similaires.

7. Agencement comprenant une machine de mesure de coordonnées et un dispositif d'identification pour identifier une représentation d'une pièce (4) à mesurer, dans lequel
- l'agencement comprend en outre au moins un dispositif de capture d'image, le dispositif de capture d'image étant adapté pour capturer au moins une image de capture de la pièce (4) à mesurer tandis que la pièce (4) à mesurer est placée dans un espace de travail (6) de la machine de mesure de coordonnées ;
- dans lequel le dispositif d'identification (32) comprend une interface sur une base de données (35 ; 45) et est adapté pour accéder à une information d'attribution concernant des attributions d'au moins certaines d'une pluralité de représentations de pièces à des images de pièces, les représentations de la pluralité de représentations étant stockées dans la base de données (35 ; 45), dans lequel chacune des au moins certaines de la pluralité de représentations a été attribuée à au moins une image d'une pièce sur la base d'un résultat de sélection d'une sélection qui a été réalisée précédemment conduisant à une partie correspondante de l'information d'attribution ;
- le dispositif d'identification (32) est adapté pour identifier automatiquement des représentations éventuellement en concordance (33) qui sont éventuellement en concordance par rapport à la pièce (4) à mesurer parmi la pluralité de représentations stockées dans la base de données (35 ; 45) ;
- le dispositif d'identification (32) est adapté pour, pendant l'identification des représentations éventuellement en concordance (33),
i) déterminer au moins une image similaire qui est similaire à l'au moins une image de capture ; et pour
ii) identifier (40) au moins une représentation d'une pièce, laquelle au moins une représentation a été attribuée à l'au moins une image similaire conformément à l'information d'attribution, en tant qu'au moins une représentation éventuellement en concordance attribuée ; et pour
iii) identifier (41) au moins une représentation éventuellement en concordance similaire qui est identifiée comme étant similaire à l'au moins une représentation éventuellement en concordance attribuée sur la base d'une information de similarité prédéfinie ;
dans lequel les représentations éventuellement en concordance (33) comprennent l'au moins une représentation éventuellement en concordance attribuée et l'au moins une représentation éventuellement en concordance similaire.

8. Agencement selon la revendication 7, comprenant en outre :
- une interface de réception (42) pour recevoir un signal de sélection qui comprend une information concernant une sélection d'une unique représentation sélectionnée, laquelle représentation sélectionnée a été sélectionnée parmi les représentations éventuellement en concordance (33) en considération de l'au moins une image de capture de la pièce (4) à mesurer et/ou en considération de la pièce (4) à mesurer ; et
- un dispositif d'émission en sortie de signal d'indication (45) adapté pour émettre en sortie un signal d'indication qui indique la représentation sélectionnée.

9. Agencement selon la revendication 8, dans lequel l'agencement comprend en outre un dispositif de mise à jour adapté pour mettre à jour l'information d'attribution en ajoutant une information concernant une attribution de la représentation sélectionnée à l'au moins une image de capture de la pièce (4) à mesurer.

10. Agencement selon la revendication 8 ou 9, dans lequel l'agencement comprend en outre un contrôleur (46) pour commander l'opération de mesure de la machine de mesure de coordonnées, dans lequel le contrôleur (46) est adapté pour charger, sur la base du signal d'indication qui indique la représentation sélectionnée, une information concernant une procédure de mesure prédéfinie qui a été prédéfinie pour mesurer la pièce (4) à mesurer et le contrôleur (46) est adapté pour commander la mesure de la pièce (4) à mesurer conformément à l'information chargée concernant la procédure de mesure prédéfinie exécutée par la machine de mesure de coordonnées.

11. Agencement selon l'une quelconque des revendications 7 à 10, dans lequel l'agencement comprend en outre un dispositif de génération adapté pour générer l'information de similarité prédéfinie sur la base de l'évaluation de caractéristiques de pièces.

12. Agencement selon l'une quelconque des revendications 7 à 11, dans lequel l'agencement comprend en outre un dispositif d'instruction qui est combiné avec le dispositif d'identification, le dispositif d'instruction étant adapté pour
- munir le dispositif d'identification de règles de détermination d'images similaires qui sont similaires à l'au moins une image de capture et/ou pour
- soumettre à apprentissage le dispositif d'identification pour déterminer les images similaires, dans lequel l'apprentissage du dispositif d'identification comprend la fourniture d'une pluralité d'images de pièces incluant des images similaires au dispositif d'identification.
